**Europäisches Patentamt**

**European Patent Office**

**Office européen des brevets**

(19)

(11) Veröffentlichungsnummer : **0 177 753**
**B1**

(12) **EUROPÄISCHE PATENTSCHRIFT**

(45) Veröffentlichungstag der Patentschrift :
**15.06.88**

(51) Int. Cl.⁴ : **F 21 M   7/00**

(21) Anmeldenummer : **85111137.7**

(22) Anmeldetag : **04.09.85**

(54) Scheinwerfer für Kraftfahrzeuge.

(30) Priorität : **11.10.84 DE 3437323**

(43) Veröffentlichungstag der Anmeldung :
**16.04.86 Patentblatt 86/16**

(45) Bekanntmachung des Hinweises auf die Patenterteilung : **15.06.88 Patentblatt 88/24**

(84) Benannte Vertragsstaaten :
**DE FR GB IT**

(56) Entgegenhaltungen :
**DE-A- 3 132 709**
**DE-C-   816 202**
**FR-A- 1 288 866**
**FR-A- 2 173 282**
**FR-A- 2 377 001**
**FR-A- 2 436 334**
**GB-A- 1 457 375**
**US-A- 3 558 872**

(73) Patentinhaber : **ROBERT BOSCH GMBH**
**Postfach 50**
**D-7000 Stuttgart 1 (DE)**

(72) Erfinder : **Bodensieck, Hans-Rudolf**
**Aspergle 22**
**D-7016 Gerlingen (DE)**
Erfinder : **Dobler, Karl-Otto**
**Lahnstrasse 5**
**D-7410 Reutlingen 25 (DE)**
Erfinder : **Hänel, Horst**
**Murrstrasse 14**
**D-7410 Reutlingen (DE)**
Erfinder : **Kohler, Kurt**
**Margeritenstrasse 16**
**D-7253 Renningen (DE)**
Erfinder : **Liedtke, Frieder, Dipl.-Ing. (FH)**
**Hölderlinstrasse 35**
**D-7433 Dettingen (DE)**
Erfinder : **Seliger, Siegfried**
**Trollingerweg 4**
**D-7141 Oberstenfeld (DE)**

**Beschreibung**

Die Erfindung betrifft einen Scheinwerfer für Kraftfahrzeuge nach der Gattung des Anspruchs 1. Aus der US-A-3 558 872 ist ein derartiger Scheinwerfer bekannt, dessen Kappe zur Befestigung am Gehäuse in einer Ringnut einrastet und dabei den Dichtring an beide Nutflanken drückt. Nachteilig an dieser Befestigung ist die Verwendung des Dichtringes, der einen bezüglich Temperatur und Zeit genau abgestimmten Herstellvorgang sowie eine Materialmischung erfordert, die sowohl dessen ausreichende Elastizität als auch Alterungsbeständigkeit über die gesamte Betriebszeit des Scheinwerfers sicherstellt.

Vorteile der Erfindung

Mit dem Scheinwerfer für Kraftfahrzeuge nach der Erfindung wird das im vorerwähnten Stand der Technik aufgezeigte Problem gelöst und sichergestellt, daß durch das Anliegen der Dichtlippe von der Kappe an der Außenfläche des Konusringes vom Gehäuse der abdichtende Verschluß auch unter erschwerten Betriebsbedingungen über die gesamte Betriebszeit des Scheinwerfers beibehalten wird.

Aus der FR-A-2 436 334 ist ein Scheinwerfer mit einer eine Glühlampe stützenden Kappe mit einer sehr elastischen und einer weniger elastischen Dichtlippe bekannt ; die Festlegung der unterschiedlichen Elastizität und Konfiguration beider Dichtlippen bereitet jedoch in der Praxis Schwierigkeiten.

Vorteilhafte Weiterbildungen der Erfindung sind in den Unteransprüchen beschrieben. Mit der Weiterbildung gemäß Anspruch 2 und 3 sind eine erste bzw. zweite Ausführung der Rastanordnung aufgezeigt. Mit der Weiterbildung gemäß den Ansprüchen 5 und 6 erreicht man eine sichere Rastung der Kappe am Gehäuse.

Zeichnung

Zwei Ausführungsbeispiele der Erfindung sind in der Zeichnung dargestellt und in der Figurenbeschreibung näher erläutert. Es zeigen : Figur 1 das erste Ausführungsbeispiel eines Gehäuses mit aufgesetzter Kappe und einer Bügelfeder als Rastanordnung in teilweise ausgeschnittener, raumbildlicher und verkleinerter Darstellung ; und die Figuren 2 bis 5 das zweite Ausführungsbeispiel mit einer aus einem offenen Scharnier und einer Schnappverbindung gebildeten Rastanordnung in Axialschnitt und natürlicher Größe ; hierbei zeigt Figur 2 die durch die Kappe verschlossene Öffnung des Gehäuses ; Figur 3 und Figur 4 die Öffnungsstellung der Schnappverbindung und des offenen Scharnieres ; und Figur 5 einen Radialschnitt im Bereich neben der Schnappverbindung.

Beschreibung der Ausführungsbeispiele

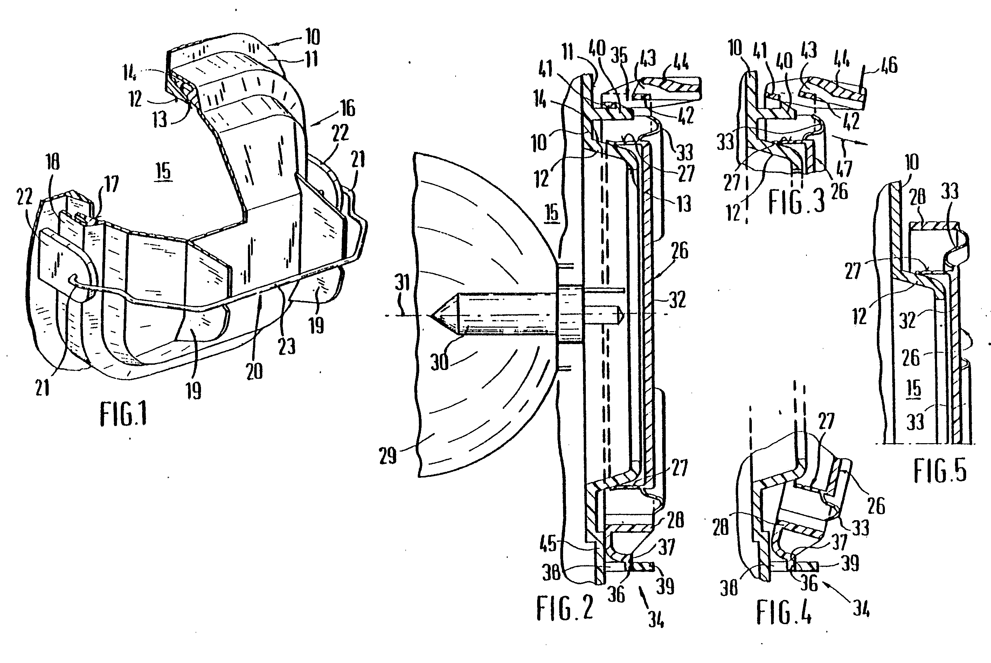

Das erste Ausführungsbeispiel in Figur 1 zeigt abschnittsweise ein Gehäuse 10, an dessen Rückseite 11 ein Konusring 12 angeformt ist mit einer sich zum Rand 13 verjüngenden Außenfläche 14. Der Konusring 12 umschließt eine Öffnung 15 für die Handhabung einer erst in Figur 2 dargestellten, in einem Reflektor eingesetzten Glühlampe.

Eine Kappe 16 aus elastischem Kunststoff hat eine radialelastische Dichtlippe 17 und einen diese umschließenden Druckring 18 sowie zwei nach hinten abstehende Rastleisten 19. Eine zweiarmige Bügelfeder 20 hat zwei Arme 21, die scharnierartig in zwei Augen 22 des Gehäuses 10 gelenkartig gelagert sind, und einen auf die Rastleisten 19 aufziehbaren und in seiner Funktionsstellung einrastenden Mittelabschnitt 23. Hierdurch ist die Kappe 16 am Gehäuse 10 festgelegt und die Dichtlippe 17 liegt an der Außenfläche 14 des Konusrings 12 an, wobei die Radialelastizität der in sich geschlossenen Dichtlippe 17 die Abdichtung der Kappe 16 zum Gehäuse 10 bewirkt.

Im zweiten Ausführungsbeispiel der Figuren 2 bis 5 haben bereits beschriebene Teile gleiche Bezugszahlen. Im Bereich der Öffnung 15 ist ein Reflektor 29 — mit einer darin von der Rückseite eingesetzten Glühlampe 30 — durch nicht dargestellte Mittel am Gehäuse 10 befestigt ; der Reflektor 29 und die Glühlampe 30 haben eine gemeinsame Achse 31. Die Kappe 26 aus elastischem Kunststoff hat im wesentlichen kreisflächenförmige Gestalt und weist eine Platte 32 mit der reifenförmigen, axialen Dichtlippe 27 auf. Ein als radialelastischer Abschnitt ausgebildeter, mehrteiliger Ringbalg 33 ist zum einen an der Kappe 26 angeformt und zum andern weist er einen Druckring 28 einstückig auf, der die Dichtlippe 27 im wesentlichen koaxial umschließt.

Die Rastanordnung ist zweiteilig und hat ein sogenanntes offenes Scharnier 34 und diesem diametral gegenüberliegend eine Schnappverbindung 35. Das Scharnier 34 hat eine vom Druckring 28 radial abstehende Zunge 36 und eine mit dieser zusammenvirkende Schulter 37, die der Rand einer Aussparung 38 eines Lappens 39 bildet, der von der Rückseite 11 des Gehäuses 10 absteht. Die Schnappverbindung 35 hat ein von der Rückseite 11 des Gehäuses 10 abstehenden Haken 40 und ein hinter diesem einrastenden Steg 41 des Druckringes 28. Im Bereich des Steges 41 bildet der Druckring 28 eine Verjüngung 42 mit zwei seitlichen Wangen 43, die ein Betätigungshebel 44 verbindet.

Figur 2 zeigt die durch die zweiteilige Rastanordnung 34, 35 am Gehäuse 10 befestigte Kappe ; hierbei stützt sich die Zunge 36 an der Schulter 37 des Lappens 39 ab und gleichzeitig liegt die Zunge 36 an dem der Schulter 37 gegenüberliegenden Abschnitt 45 der Rückseite 11 des Gehäuses 10 an. In der dargestellten Funktionslage der Schnappverbindung 35 rastet der Steg 41 des Druckringes 28 durch dessen Elastizität hinter dem Haken 40 des Gehäuses 10 ein.

Die Öffnungsstellung der Rastanordnung 35, 36 in Figur 3 erreicht man durch Druck gemäß Pfeil 46 auf den Betätigungshebel 44 und dessen Ausschwenken gemäß Pfeil 47 ; dabei löst sich die Schnappverbindung 34 in der dargestellten Weise.

Ein erneutes Festlegen der Kappe 26 am Gehäuse 10 erfolgt bei zusammengefügtem Scharnier 34 und durch Zurückschwenken entgegen Pfeilrichtung 47 der Kappe 26 in die in Figur 1 dargestellte Funktionslage.

## Patentansprüche

1. Scheinwerfer für Kraftfahrzeuge mit einem einen Reflektor (29) aufnehmenden Gehäuse (10), das eine rückwärtige Öffnung (15) für die Handhabung einer im Reflektor (29) festgelegten Glühlampe (30) aufweist, und mit einer die Öffnung (15) verschließenden Kappe (16, 26) aus elastischem Material, die beim Festlegen am Gehäuse (10) einen Dichtring an eine Schulter des Gehäuses (10) drückt, dadurch gekennzeichnet, daß die Schulter als ein Konusring (12) mit einer zu dessen Rand (13) sich verjüngenden Außenfläche (14) ausgebildet ist, daß der Dichtring eine an der Kappe (16, 26) angeformte Dichtlippe (17, 27) ist, die durch einen Ringbalg (33) und einen Druckring (18, 28) mit einer Rastanordnung (20, 34, 35) einstückig verbunden ist, und daß beim Festlegen der Rastanordnung (20, 34, 35) am Gehäuse (10) die Dichtlippe (17, 27) an der Außenfläche (14) des Konusringes (12) zum Anliegen kommt.

2. Scheinwerfer nach Anspruch 1, dadurch gekennzeichnet, daß die Rastanordnung eine zweiarmige Bügelfeder (20) ist, deren beide Arme (21) gelenkig an der Rückseite (11) des Gehäuses (10) festgelegt sind und deren Mittelabschnitt (23) beim Aufziehen auf die Kappe (16) eine Axialkraft auf die Dichtlippe (17) ausübt.

3. Scheinwerfer nach Anspruch 1, dadurch gekennzeichnet, daß die Rastanordnung zweiteilig ist mit einem offenen Scharnier (34) und einer dem Scharnier diametral gegenüberliegenden Schnappverbindung (35).

4. Scheinwerfer nach Anspruch 3, dadurch gekennzeichnet, daß das offene Scharnier (34) eine vom Druckring (28) radial abstehende Zunge (36) und eine Schulter (37) der Rückseite (11) des Gehäuses (10) ist und daß die Zunge (36) sich bei am Gehäuse (10) aufgesetzter Kappe (26) an der Schulter (37) abstützt.

5. Scheinwerfer nach Anspruch 4, dadurch gekennzeichnet, daß die Schulter (37) der Rand einer Aussparung (38) eines Lappens (39) ist, der von der Rückseite (11) des Gehäuses (10) absteht, und daß die Zunge (36) an dem der Schulter (37) gegenüberliegenden Abschnitt (45) der Rückseite (11) des Gehäuses (10) anliegt.

6. Scheinwerfer nach Anspruch 5, dadurch gekennzeichnet, daß ein von der Rückseite (11) des Gehäuses (10) abstehender Haken (40) und ein hinter diesem einrastender Steg (41) des Druckringes (28) die Schnappverbindung (35) sind und daß ein die Schnappverbindung (35) einrastbarer Betätigungshebel (44) am Druckring (28) angeformt ist.

7. Scheinwerfer nach einem der vorgenannten Ansprüche, dadurch gekennzeichnet, daß die Kappe (26) mit dem angeformten Teil aus elastischem Kunststoff besteht.

## Claims

1. Headlamp for motor vehicles having a housing (10) receiving a reflector (29) which exhibits a rear aperture (15) for the manipulation of an incandescent lamp (30) secured in the reflector (29), also having a cap (16, 26) of resilient material closing the aperture (15), which, when secured to the housing (10), presses a ring seal against a shoulder or the housing (10), characterized in that the shoulder is constructed as a cone ring (12) having an external surface (14) tapering towards its edge (13), that the ring seal is a sealing lip (17, 27) shaped integrally on the cap (16, 26), which is connected integrally by an annular bellows (33) and a pressure ring (18, 28) to a catch arrangement (20, 34, 35), and that, when the catch arrangement (20, 34, 35) is secured to the housing (10), the sealing lip (17, 27) comes into abutment against the external surface (14) of the cone ring (12).

2. Headlamp according to Claim 1, characterized in that the catch arrangement is a two-armed bow spring (20), both arms (21) of which are secured articulately to the rear side (11) of the housing (10), and the median section (23) of which exerts an axial force upon the sealing lip (17) when drawn up onto the cap (16).

3. Headlamp according to Claim 1, characterized in that the catch arrangement is two-part with an open hinge (34) and a snap connection (35) diametrally opposite the hinge.

4. Headlamp according to Claim 3, characterized in that the open hinge (34) is a tongue (36) standing out radially from the pressure ring (28) and a shoulder (37) of the rear side (11) of the housing (10) and that the tongue (36) is braced against the shoulder (37) and the cap (26) is placed on the housing (10).

5. Headlamp according to Claim 4, characterized in that the shoulder (37) is the edge of a recess (38) of a tab (39) which stands out from the rear side (11) of the housing (10), and that the tongue (36) abuts against the section (45) of the rear side (11) of the housing (10) opposite the shoulder (37).

6. Headlamp according to Claim 5, characterized in that a hook (40) standing out from the rear side (11) of the housing (10) and a web (41) of the pressure ring (28) catching behind the latter are the snap connection (35) and that an actuating lever (44) adapted to engage the snap connection (35) is shaped integrally on the pressure ring (28).

7. Headlamp according to any of the previous Claims, characterized in that the cap (26) with the integrally shaped part consists of resilient plastic.

## Revendications

1. Projecteur pour automobiles avec un carter (10) recevant un réflecteur (29), qui possède une ouverture (15) arrière, pour la manipulation d'une lampe à incandescence (30) fixée dans le réflecteur (29) et avec un capuchon (16, 26), en matériau élastique, obturant l'ouverture (15) et qui, lors de la fixation au carter (10), presse une bague d'étanchéité à un épaulement du carter (10), caractérisé en ce que l'épaulement est conformé en une bague conique (12), avec une surface extérieure (14) diminuant vers cette extrémité (13) et que la bague d'étanchéité est une lèvre d'étanchéité (17, 27) formée sur le capuchon (16, 26), qui est reliée par un soufflet annulaire (33) et une bague de pression (18, 28), avec un arrangement à crans (20, 34, 35) en une seule pièce, et que la lèvre d'étanchéité 17, 27) vient appuyer sur la surface extérieure (14) de la bague conique (12), lors de la fixation de l'arrangement à crans (20, 34, 35) sur le carter (10).

2. Projecteur selon la revendication 1, caractérisé en ce que l'arrangement à crans est un ressort à étrier (20) à deux bras, dont les deux bras (21) sont fixés de manière articulée au côté arrière (11) du carter (10) et dont la section médiane (23) exerce une force axiale sur la lèvre d'étanchéité (17), lors du serrage sur le capuchon (16).

3. Projecteur selon la revendication 1, caractérisé en ce que l'arrangement à crans est en deux parties, avec une charnière ouverte (34) et une liaison à déclic (35), située diamétralement opposée à la charnière.

4. Projecteur selon la revendication 3, caractérisé en ce que la charnière ouverte (34) est une langue (36) s'écartant radialement de la bague de pression (28) et un épaulement (37) du côté arrière (11) du carter (10) et que la langue (36) s'appuie sur l'épaulement (37), au capuchon (26) appliqué sur le carter (10).

5. Projecteur selon la revendication 4, caractérisé en ce que l'épaulement (37) est le bord d'un évidement (38) d'une languette (39), qui est à distance du côté arrière (11) du carter (10) et que la langue (36) appuie sur la section (45) du côté arrière 11 du carter (10), qui est opposée à l'épaulement (37).

6. Projecteur selon la revendication 5, caractérisé en ce qu'un crochet (40) s'écartant du côté arrière (11) du carter (10) et une nervure (41) de la bague de pression (28) enclenchant derrière lui, formant la liaison à déclic (35) et qu'un levier d'actionnement (44) est formé sur la bague de pression (28) et qui peut enclencher la liaison à déclic (35).

7. Projecteur selon l'une des revendications 1 à 6, caractérisé en ce que le capuchon (26), avec la partie formée, se compose de matière plastique élastique.

0 177 753

FIG.1

FIG.2

FIG.3

FIG.4

FIG.5